# EUROPEAN PATENT APPLICATION

(11) **EP 4 513 702 A1**
(43) Date of publication of application: **26.02.2025**
(21) Application number: 23192443.2
(22) Date of filing: 21.08.2023
(51) Int. Cl.: H02J 3/32, H02J 3/38

(54) **ELECTROLYSIS SYSTEM COMPRISING AN ELECTROLYSIS PLANT AND A RENEWABLE POWER GENERATION PLANT AND METHOD FOR CONTROLLING AN ELECTROLYSIS SYSTEM**

(71) Applicant: Siemens Energy Global GmbH & Co. KG, 81739 München (DE)
(72) Inventor: Schumann, Sven, 91452 Wilhermsdorf (DE); Loku, Fisnik, 90768 Fürth (DE)

(57) **Abstract**

Electrolysis system comprising an electrolysis plant and a renewable power generation plant and method for controlling an electrolysis system.

The present invention relates to an electrolysis system (100) comprising a renewable power generation plant (1) and an electrolysis plant (3) that both are connected to a common AC bus bar (5), wherein the electrolysis plant (3) comprises a rectifier (7) whose AC input (9) is connected to the AC bus bar (5) and whose DC output (11) is arranged to supply DC current to operate an electrolysis process, and wherein an inverter-based energy storage system (13) with a storage unit (15) and a storage controller (17) is provided, the storage unit (15) being implemented in parallel to the electrolysis plant (3) and connected to the AC bus bar (5), and the storage controller (17) being configured to control the active power (P_{S}) of the storage unit (15) in such a way that the operation of a synchronous generator is emulated to stabilize the AC input voltage.

The invention further relates to a method for operating an electrolysis system.

## Description

Electrolysis system comprising an electrolysis plant and a renewable power generation plant and method for controlling an electrolysis system.

The present invention relates to an electrolysis system comprising an electrolysis plant and a renewable power generation plant. Furthermore, the invention relates to a method for controlling the electrolysis system.

Electrolysis is a widely known electro-chemical method, wherein a direct (electrical) current (DC) is used to drive an otherwise non-spontaneous chemical reaction. Electrolysis has recently received high attention as a factor in fighting against climate change, as it may be utilized in so-called "power to X" processes. In said processes, a supply medium (such as water or CO₂) is generally converted by means of renewable electrical energy into chemical energy via electrolysis. The electrolysis products containing this energy ranging from e.g. hydrogen H₂ (with O₂ as by-product) over small hydrocarbons like methane CH₄ (also termed "synthetic natural gas" SNG or synthetic LNG in its liquid form), ethylene C₂H₄ or ethanol C₂H₅OH to ammonia NH₃ or carbon monoxide CO. Said molecules may be used as fuel, e.g. for vehicles or generators, or as feedstock for the chemical industry.

An electrolysis system is a device that uses electricity from an electrical power source to convert substances (electrolysis). Corresponding to the variety of different electrochemical electrolysis processes, also a high number of different electrolysis systems a proposed, such as an electrolysis system for water electrolysis.

Hydrogen is a particularly environmentally friendly and sustainable energy source. It has the unique potential of realizing energy systems, transportation systems and large parts of chemical industry without COz emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid.

Hydrogen is nowadays generated from water, for example, by means of a proton exchange membrane (PEM) electrolysis or an alkaline electrolysis. The electrolysis systems use electrical energy to produce hydrogen and oxygen from the water supplied. This process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water and gas bubbles (O₂ and H₂).

In general, said electrolysis process needs to be supplied with a predictable power input. Whereas the generation of renewable energy is known to provide a fluctuating power due to various reasons. For example, the amount of generated energy is dependent on weather conditions or on the position of the sun. Further, the amount of generated energy depends on the current season as well as on the course of the day. To protect electrolysis cells from damage caused by fluctuations in the input power, they must be operated in such a way that no energy shortage occurs during operation. To this end, generated power cannot be consumed entirely, but has sometimes to be partly wasted.

It is therefore very desirable to combine in an electrolysis system a renewable energy plant directly with an electrolysis plant to produce hydrogen to obtain in the best mode hydrogen that is 100% generated from a renewable energy source or at least based on a high portion of renewable energy generation and exhibits only a minor consumption, in case needed only, of electricity from the public grid with fossil-based power contributions. However, for the operation of large-scale electrolysis plants high DC currents are required to supply the electrolysers that are usually arranged in parallel and connected to an AC bus bar. Large rectifier systems are required to extract on the rectifier input side the AC current from the AC bus bar that is provided from the renewable energy plant and to convert the AC current into DC current available at the rectifier output to supply the electrolysers accordingly. In weak power networks or island mode of a combined renewable energy plant with an electrolysis plant maintaining a stable operation is a technical challenge. Disturbances that occur at the point-of-common-coupling (PCC) need more efforts in weak or islanded grids compared to large public grids which provide a defined high inertia from conventional power plants. Particularly, it is challenging in weak or islanded grids to hold a minimum short circuit power that is essential at the point-of-common-coupling (PCC).

It is therefore an object of the invention to improve operational behaviour in a combined renewable plant and an electrolysis plant in regard to provide a stable operation that is required for the integration of the electrolysis plant.

This object is solved by an Electrolysis system comprising a renewable power generation plant and an electrolysis plant that both are connected to a common AC bus bar, wherein the electrolysis plant comprises a rectifier whose AC input is connected to the AC bus bar and whose DC output is arranged to supply DC current to operate an electrolysis process, and wherein an inverter-based energy storage system with a storage unit and a storage controller is provided, the storage unit being implemented in parallel to the electrolysis plant and connected to the AC bus bar, and the storage controller being configured to control the active power of the storage unit in such a way that the operation of a synchronous generator is emulated to stabilize the AC input voltage.

Furthermore, this object is solved by a method for operating an electrolysis system, whereby the active power of the storage unit is controlled from the storage controller, whereby the operation of a synchronous generator is emulated to stabilize the AC input voltage and a short circuit power at the point of common coupling is provided.

The invention is based already on the consideration about the problem of low inertia in electrolysis systems supplied with a high proportion of renewable energies from a renewable power generation plant, where the role of virtual inertia requires special solutions. Today, due to the widespread penetration of renewable energy sources (RES) and distributed generators (DGs), a new problem of the stability of the power grid has emerged. This problem is the reduction and variation of inertia in the power grid and is triggered by the use of power electronics interfaces to connect the RES and DGs to the system, resulting in higher system uncertainty that requires more complex system operation and control. The operation of large-scale electrolysis systems required high DC currents.

Today, due to the widespread penetration of renewable energy sources (RES) and distributed generators (DGs), an increasing new problem of the stability of the power grid has emerged. This problem is the reduction and variation of inertia in the power grid and is triggered from the use of power electronics interfaces to connect the RES and DGs to the system, resulting in higher system uncertainty that requires more complex system operation and control.

Power electronic interfaced Renewable Energy Sources (RES) continue to replace Synchronous Generators (SG) in the power system. The increase of RES changes the structure and operation mode of electrical power systems due to the fewer Synchronous Generators and more inverter-based power sources. This change results in a decrease in the system inertia and an increase in intermittent power generation. In traditional power systems, Synchronous Generators provide frequency stability via stored kinetic energy, which plays an important role in primary frequency control - increasing the penetration of inverter-interfaced RES results in a reduction of stored mechanical energy. This can result in larger frequency swings which in turn can cause reliability issues, such as tripping of loads and generation. Due to changes in the traditional electric system, increasingly dominated by Distributed Generation (DG) systems based on RES, the concept of microgrids emerges from integrating different kinds of RES.

With the invention a grid forming control is achieved in an electrolysis system that is designed with an inverter-based-storage system in combination with an electrolysis plant for autonomous operation or island mode with a renewable power generation plant. This concept represents an ideal AC voltage source that can be operated or controlled at a fixed AC frequency of operation. Huge challenges in systems with large-scale electrolysis plants in combination with a renewable power generation plant, for example in islanded mode or weak grids, can be solved. Advantageously, sufficient short circuit power (SCP) at the point of common coupling (PCC) can be provided.

The production of green hydrogen in an electrolysis plant requires the necessary power to be delivered by renewable energy sources. For example, as an inverter-based energy storage systems a Battery Energy Storage Systems (BESS) can be used with renewable power generation plant. These store energy when there is excessive production and provide energy when needed to stabilize the grid voltage. Considering that the BESS comprise of inverters and respective control components, the control scheme - according to the invention - can be arranged and configured advantageously to contribute to provide the necessary SCP at the PCC as required for the large-scale electrolysis systems. This is done by using the approach of virtual inertia implementation in the application and configuration of the control scheme, which is designed to emulate the inertia of a synchronous generator. In addition, the BESS can also provide filtering and reactive power compensation services and thus reduce the costs for additional equipment to fulfil grid requirements.

In an advantageous embodiment of the electrolysis system the storage controller is configured to receive as input signal a virtual angular frequency derived from a free-running oscillator such that during operation a virtual inertia is provided in the AC grid.

It is to be understood that in the electrolysis system an AC grid operating at a determined frequency is being formed particularly from the AC bus bar and the electrical components that are arranged and connected with their AC interface to the AC bus bar. The virtual angular frequency that is provided emulates the inertia of a synchronous generator. This functionality can by preferably implemented and provided by the storage controller itself. In case of a shift and deviation of the actual frequency from a predetermined setpoint frequency of operation of the AC grid, a virtual frequency correction term can be added or subtracted as required from the linear control function of the active power depending on the actual frequency. The correction term for this frequency control functionality is derived from a comparison of the actual AC frequency in the AC grid with the free-running oscillator as reference. and then supplied as input to the controller.

In a further advantageous embodiment of the electrolysis system the storage controller is configured to provide as output signal an AC control signal usable to control operation of the storage unit at a determined active power.

With this provision the active power can be easily adjusted according to the received frequency input signal described above by adapting the AC current - increasing or decreasing - while adding a respective correction term for the effective amperage.

Preferably, a linear control characteristic between active power and frequency is implemented in the control scheme of the storage controller, so-called droop (German: "Statik").

Droop is understood to be a linear controller characteristic that describes the behavior of a generator set as a function of the network variables such as either power and frequency (frequency maintenance), or as a function of voltage and frequency (voltage maintenance). It is used as an information carrier in the interconnected operation of many power plants to coordinate the primary control of active power and reactive power via the grid variables.

Depending on the mains frequency, the active power can be regulated, for example by increasing the torque and thus also the power in a turbo set as the mains frequency decreases and vice versa. The mains voltage is included as an input variable in the reactive power control. The level of the excitation current can be used to adjust the reactive power output of the synchronous generator. A droop-control connection is when a PI controller is combined with a reactive or active power-dependent, linear influence on the setpoint.

In islanded or weak grid, like for electrolysis system of the present invention, similar operational behavior concerning maintaining a stable voltage in the grid, is also required from other power generators that are not directly connected to a large public grid with a synchronous generator that provides sufficient inertia. Hence, for example, the control engineering implementation in wind turbines and photovoltaic converters can be carried out in electronic form via the control of the converters. Here the electrolysis system is advantageously extended with a controllable inverter-based energy storage system which in combination with the renewable power generation plant is enabled to provide the required short circuit power (SCP) at the point of common coupling (PCC), while green hydrogen can be produced in the electrolysis plant.

In a further advantageous embodiment of the electrolysis system a droop-control is implemented to stabilize the AC grid, wherein in the droop-control the dependency of the active power on the alternating current frequency is stored.

With this provision an implementation of a linear controller characteristics can be preferably realized in the storage controller, a linear statics or droop-control function between main frequency and current of the AC grid.

In order to ensure according to the electrolysis system of the invention a stable operation of the alternating current in a weak or islanded network, the setting value of a static or droop, is used in electrical engineering for power generators. The characteristic value of the statics describes the negative slope of the normalized characteristic curve ω(P) or U(Q). This represents the dependence of the setpoint of the active power P on the frequency ω or that of the reactive power Q on the voltage U.

The value of the statics or droop is thus the quotient of frequency deviation at nominal power compared to no-load and nominal frequency. The inertia to stabilize the AC voltage is advantageously provided by the storage unit that can be controlled accordingly by the storage controller. With this a stabilization of the AC input voltage of the rectifier is obtained through stabilization of the grid voltage on the AC bus bar. This enables implementation of efficient rectifier topologies for the electrolysis system that are particularly applicable in large-scale electrolysis systems with a plurality of electrolysers connected in parallel that need high currents to be supplied.

Therefore, in a particular advantageous embodiment of the electrolysis system the rectifier comprises a thyristor-based rectifier.

The operation of large-scale electrolysis systems requires high DC currents. Considering the current ratings, the state-of-the-art rectifier technology that is usually utilized are the thyristor-based rectifiers. In addition to the high-current rating, thyristor-based rectifiers have low losses, are a mature technology and have a high reliability. When a thyristor-based rectifier is operated, large currents flow into the electrolyser modules. From the network point of view at the point-of-common-coupling (PCC) with the electrolysis system, the electrolysis system looks like a non-ideal varying load with a low power factor. Consequently, the inrush current into the DC side of the rectifiers, distorts the AC voltage as provided by the respective network. Considering this, for the connection of an electrolysis system to a network, a minimum short circuit power (SCP) at the PCC is required. Among others, a minimum SCP is required in a system to ensure the reliability of the power supply. As described above, generally, the necessary SCP has been provided by conventional power plants, with the generator units having a defined inertia. However, considering the energy transition as well as the efforts to produce green hydrogen, the conventional power plants are consistently being replaced by renewable energy sources. In addition, it is expected that many green hydrogen producing facilities will be placed in remote areas where renewable power generation is cheap and the grid connections weak. This has an influence on the resulting SCP at the PCC that is required for the integration of the electrolysis systems.

With the invention a reliable and efficient thyristor-based rectifier topology can be advantageously implemented in the electrolysis system that is scalable to supply particularly large-scale electrolysis plants with AC current in a combination and direct AC coupling with a renewable power generation plant. In another advantageous embodiment of the electrolysis system the electrolysis plant comprises a number of thyristor-based rectifiers that are connected in parallel with their respective AC input to the AC bus bar. This preferred system is scalable and particularly also a plurality of thyristor-based rectifiers can be applied to supply high currents for operating a large-scale power electrolysis plant with a plurality of electrolysers. This can be adapted and scaled accordingly depending on the power available from the renewable power generation plant and the capacity and operational dynamics of the inverter-based storage system.

While several concepts of virtual inertia implementation are described, no solution or application have been yet suggested and enabled for utilization in weak or islanded networks consisting of an electrolysis system connected to a renewable energy source. Emulating the inertia of synchronous generators by the means of virtual inertia approach within an inverter-based energy storage system. like BESS, enables the stable integration of the electrolysis plant in islanded networks or weak grids, as it supports the stable functioning of controllers especially at faulty conditions. Furthermore, this would mean that from the renewable energy source side, no excessive additional costs would result as an energy storage system such as the BESS usually accompanies the renewable energy sources. Lastly, for the design of the electrolysis systems, the proven and already used approaches, i.e., required minimum SCP at PCC for the transformer unit design, can be used without any additional effort.

Usually, in case the input voltage of the rectifiers is disturbed significantly during the commutation process, the synchronisation of the rectifier input voltage becomes critical, such that if not done properly the whole system can become unstable. This problem that can be solved with an advantageous embodiment of the invention in weak grids that implement thyristor-based electrolysis systems.

Among others, it is important to have a stable input voltage during the most critical operational scenarios and events. These events may be various, e.g., deviation of the voltage frequency, inrush currents of the electrolyser connection transformers, sudden active power input change and others. In order to address this problem, an inverter-based energy storage system, such as the BESS, can be advantageously implemented in parallel to the electrolysis plant in such a way that the active power control of the BESS is implemented to emulate the operation of a synchronous generators. This means that instead of applying the conventional approach of active power control of inverter-based systems, which is done by controlling the AC Current components at the point of interest in the network, the virtual inertia approach would mean the control of the active power of the BESS via the virtual angular frequency.

In a further advantageous embodiment the electrolysis system comprises a first active power sensor located at an AC connecting line of the renewable power generation plant and a second active power sensor located at an AC connection line of the electrolyser plant, and further comprises a comparator device with an minuend input and a subtrahend input, the first active power sensor is connected to the minuend input and the second active power sensor is connected to the subtrahend input.

With this sensor arrangement a compensation of harmonics on the AC bus bar involved from the thyristor-based rectifier can be achieved through superposition.

Hence, a first AC amperage that is generated from in the renewable power generation plant and feed in the AC bus bar can be measured with the first sensor. A second amperage that is provided on and extracted the primary side at the connecting transformers supplying the electrolysis plant can be measured with the second sensor. The difference amperage between the first and the second amperage values can be determined in a comparator device.

This AC difference is then fed to the storage controller as a controller input signal. The storage controller, on the other hand, advantageously is enabled to control the supply of DC power or withdrawal of AC power via AC-DC converters preferably available of the inverter-based storage system, configured for example as a BESS.

The electrolysis power is set to a setpoint so that a reference value is given. By measuring the power, for example the necessary switching angle for the thyristor-based rectifier is determined so that the active power can reach the reference value. This is done by a PI controller that is implemented and available in the electrolysis system.

At the inputs of the comparator device, the power fed into the grid by the renewable energy power plant is determined, as well as the power required by the electrolysis plant. This also allows to determine how much power is left over for the inverter-based storage system, and if it is needed to charge or recharge the storage system. In the other hand, advantageously, the same input can be used as a reference for the feedback droop-control. Through the droop-control as well as the regulation of grid frequency, the virtual inertia can be emulated, as this allows to influence and control the adaption - increase or decrease - of the power as if it were the result of a synchronous generator with same required inertia.

In a further advantageous embodiment of the electrolysis system the electrolysis plant comprises an electrolysis active power controller that is enabled such that during operation a control of the active power at the respective DC-output of a thyristor-based rectifier to a set point of the electrolysis plant is achieved.

With this configuration the power setpoint for the electrolysis plant might be smoothly adjusted in case needed considering the actual or predicted power generation from the renewable power generation plant and the capacity and loading level of the inverter-based storage system. With this a control of the hydrogen production can be achieved and a stable operation while stabilizing the AC voltage on the AC bus bar and balancing out power flux while charging or discharging the inverter-based storage system.

In a particularly advantageous embodiment of the electrolysis system the inverter-based energy storage system comprises a battery energy storage system with a plurality of battery units switched in parallel.

Each battery unit might preferably be connected to the AC bus bar by a separate individual connection line. This enables individual control of the load factors and charging or discharging operation of each unit respectively.

Advantageously each battery unit is connected to and supplied from a respective bidirectional inverter that is connected to AC bus bar.

With this circuitry arrangement active power can be extracted from or feed in the AC bus bar, as needed, and controlled from the storage controller.

In a particular advantageous embodiment of the electrolysis system an islanded network or weak grid is formed.

The invention enables reliable application of greed hydrogen production in an islanded networks or in a weak grid situation, like installation of an electrolysis system in remote areas integrating wind production or photovoltaic production.

Preferably, in the electrolysis system the renewable power generation plant comprises a wind power plant with an AC output that is connected to the AC bus bar.

The electrolysis system and the operational control concept is flexibly applicable to a wind power plant installed at the point of common coupling for renewable power generation in onshore or offshore applications.

In a further advantageous embodiment of the electrolysis system the renewable power generation plant comprises a photovoltaic plant with a voltage-source converters connected with its AC output to the AC bus bar.

In a further advantageous embodiment of the electrolysis system the renewable power generation plant comprises a photovoltaic plant with a number of or a plurality of voltage-source converters connected with their AC-output to the AC bus bar.

Photovoltaic plants feature converters which must fulfil very high requirements for grid compatibility. As a result this type of converter is able to compensate and filter for other units, in general, if applied appropriately. Depending on the power ratio between the renewable power generation plant and the electrolysis plant, the voltage-source converters of a photovoltaic plant can handle the negative grid impact of the thyristor rectifiers in the converter arrangement of the electrolysis plant completely. To do so, the control loops of the different converters can be beneficially combined in the overall control concept that in the present invention also incorporates the inverter-based storage system and the storage controller.

According to another aspect of the invention a method for operating an electrolysis system is suggested. The method is particularly applicable to operate the electrolysis system as described above. When operating such an electrolysis system whereby the active power of the storage unit is controlled from the storage controller, whereby the operation of a synchronous generator is emulated to stabilize the AC input voltage and a short circuit power (SCP) at the point of common coupling (PCC) is provided.

In an advantageous implementation of the method the storage controller receives as input signal a virtual angular frequency that is generated from a free-running oscillator such that during operation a virtual inertia is provided in the AC grid.

In a further advantageous application of the method the storage controller provides as output signal an AC control signal that is used to control operation of the storage unit at a determined active power setpoint.

In a further advantageous implementation of the method a droop-control is being performed based on a predetermined dependency of the active power on the alternating current frequency that is applied.

Preferably a linear function is used for the droop-control and implemented in the controller.

The advantages regarding the method for operating an electrolysis system result - mutatis mutandis - from the advantages that are described above in detail for an electrolysis system according to the invention, that is being operated according to the method.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:
- FIG 1: an example of an electrolysis system comprising a combination of a renewable power generation plant and an electrolysis plant;
- FIG 2: a schematic illustration of the control concept to operate the electrolysis system;
- FIG 3: a droop control strategy that is applied in the control concept of the electrolysis system.

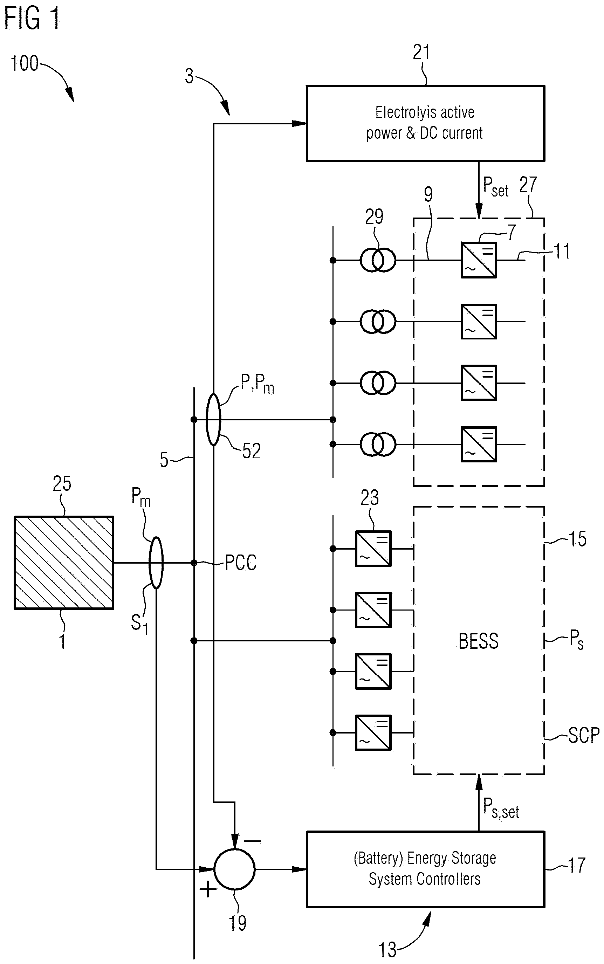

FIG 1 shows a schematic view of an example of an electrolysis system 100. Said electrolysis system 100 comprises an electrolysis plant 3 and a renewable power generation plant 1 in a combination that are both connected to a common AC bus bar 5 that operates at medium-voltage level. The renewable power generation plant 1 comprises a wind power plant 25, that can be installed offshore and integrated as part of a large offshore wind farm for example. The renewable power generation plant 1 is exemplary a wind power plant 25. Additionally, or alternatively, said renewable power generation plant 1 can also comprise a photovoltaic plant or a concentrated solar power plant or other types of plants for renewable energy generation, like biomass- or hydro based, or combinations thereof. The electrolysis plant 3 and the wind power plant 25 are connected to an AC bus bar 5, such that an islanded or weak AC grid is formed. Furthermore, an inverter-based energy storage system 13 is provided that comprises a storage unit 15 and a storage controller 17. In the present example the storage unit 15 is conceived as a battery energy storage system BESS with a plurality of battery units - that are not shown in detail in FIG 1 - and that are arranged in parallel and connected to the AC bus bar 5. In order to maintain a high system reliability of the electrolysis system 100 and to ensure efficient use and integration of renewables and distributed generation in this weak AC grid, the synthesis and control of virtual inertia is being implemented by the inverter-based energy storage system 13. For this the storage controller 17 is configured to control the active power P_{S} of the storage unit 15 in such a way that a synchronous generator is emulated to stabilize the AC input voltage. For this stabilization of grid voltage an active power control scheme is implemented in the electrolysis system 100 that is enabled to provide the necessary short circuit power SCP as point of common coupling PCC. This is being achieved by using the bidirectional inverters 23 of the BESS and by configuring and operating the control components:
A first active power sensor S1 is arranged at a metering point the AC connection line of the wind power plant 25 to the AC bus bar 5. The sensor S1 is designed to determine an active power measured value Pₘ about the generated active power that is feed in the AC bus bar. The signal of first active power sensor S1 is supplied and used as a minuend input in a comparator device 19. The second active power sensor S2 is arranged at an AC connection line of the electrolyser plant 3 to the AC bus bar 5 closely located to the connection transformer 29 and rectifier 11. The sensor S2 is designed to determine an active power measured value Pₘ about the active power P that is extracted from the AC bus bar to operate the electrolysis process in the electrolyser 27. The signal of second active power sensor S2 is supplied respectively and used as a subtrahend input in the comparator device 19 and as an input signal of the electrolysis active power controller 21. Furthermore, during operation of the thyristor-based rectifier 5 the harmonics that are generated and injected via the AC input 9 in the AC bus bar 5 are monitored and can advantageously be - at least partly - compensated through superposition when applying in the control scheme. It is possible that the active power signals S1 and S2 are determined and derived from a measurement of the respective AC currents at a determined grid voltage. In operation of the electrolysis system 100 the control scheme is being activated and the storage unit 15 receives a setpoint value P_{S, set} from the storage controller 17. Furthermore, the electrolysis active power controller 21 receives as an input the active power measured value Pₘ and provides a setpoint value Pₛₑₜ for the active power P of the electrolysis plant 3. With this configuration the
In the inverter-based energy storage system 13 the storage unit 15 is connected by virtue of a bidirectional inverter 23 to the AC bus bar in parallel to the electrolysis plant 3. On the other hand, the electrolysis plant 3 comprises an electrolyser 27 that is coupled by virtue of a rectifier 7 to the AC bus bar 5. Der rectifier 7 is based on thyristor technology, as a thyristor-based rectifiers 7 are reliable and enable high current ratings required to operate large-scale electrolysis plants 3. The rectifier 7 has an AC input 9 and a DC output 11, the latter is arranged to supply high DC current to the electrolyser 27.

Considering that particularly the BESS is arranged with a plurality of bidirectional inverters 23 and respective control components, they can be configured to contribute to providing the necessary short circuit power SCP at the point of common coupling PCC as required for the electrolysis systems 100. This can be done by using the approach of virtual inertia implementation, which emulates the inertia of a synchronous generator. In addition, the BESS is also enabled to provide filtering of harmonics and reactive power compensation services and thus possibly reduce the costs for additional equipment to fulfil grid requirements. With the electrolysis system 100 as described a flexible and reliable operation is achieved for current and future islanded or weak power grids with a very high or even a 100% share of renewable power generation. The concept of virtual inertia synthesis and control for the purposes of grid control and voltage stabilization is being implemented for a combined renewable plant 1 and electrolysis plant 3 in an electrolysis system 100 that includes a controllable inverter-based energy storage system 13, preferably comprising a BESS as storage unit 15. For the active power Pₘ measured signals S1 and S2 are provided to the comparator device 19. The output from the comparator 19 is provided to the input of the storage controller 17 and processed in the storage controller 17 to control the storage unit 15 and to balance and adjust regarding the electrolysis active power setpoint Pₛₑₜ given from the electrolysis active power controller 21.

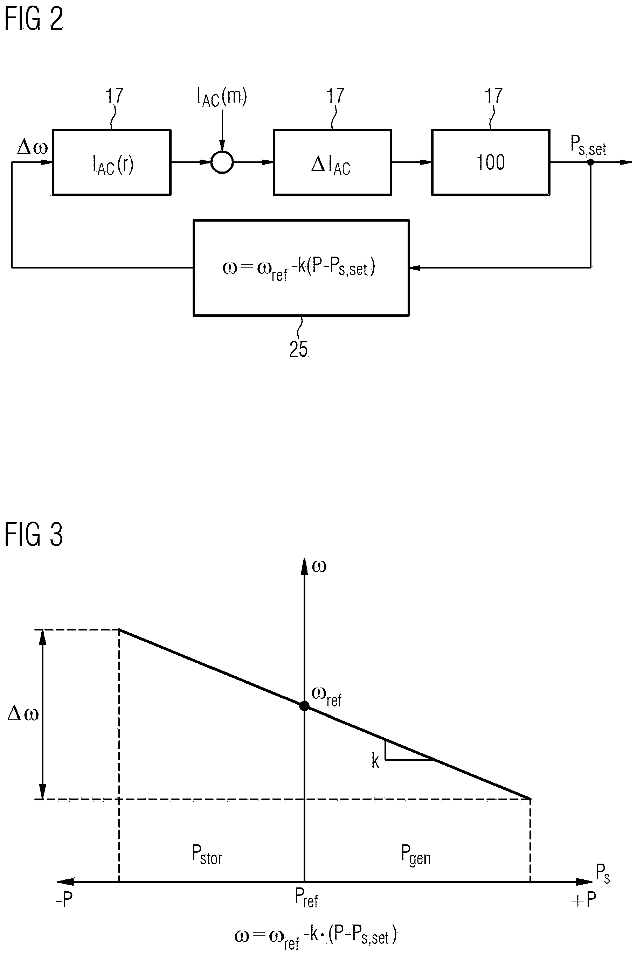

In order to illustrate and explain the control principles and operational method of voltage stabilization with virtual inertia according to the invention in some detail, FIG 2 shows a simplified scheme that is implemented electrolysis system 100 as described above. The problem of low inertia in the electrolysis system 100 with a high proportion of renewable energy production is addressed with an improved control concept that integrates an inverter-based energy storage system 13, such as BESS, in parallel to the electrolysis plant 3 in such a way that the active power control of the BESS that is executed in the storage controller 17 is configured to emulate the operation of a synchronous generator.

In the control scheme a feedback loop with a droop control 25 is implemented and programmed that shows a linear characteristic and that enables feedback about the actual AC angular frequency ω of the grid compared to a reference frequency ω_{ref} of the alternating current. Depending on the mains frequency ω, the active power P is regulated. Hence, a required setpoint value P_{S,set} of the active power P for the storage unit 15 is being processed applying a linear coupling constant k as droop control parameter. The active power P_{S} of the storage unit 15 is controlled from the storage controller 17, whereby the operation of a synchronous generator is emulated to stabilize the AC input voltage. Furthermore, a short circuit power SCP at the point of common coupling PCC is provided. The storage controller 17 receives as input signal a virtual angular frequency Δω from a free-running oscillator that can be integrated in the controller 17. This, during operation, a virtual inertia is provided in the AC grid. To accomplish this a reference value I_{AC}(r) is provided for the alternating current. The storage controller 17 then provides after a comparison with the actual measured value I_{AC}(m) for the alternating current as output signal an AC control signal ΔI_{AC}. The AC control signal ΔI_{AC} is then processed to operate and the electrolysis system storage unit 15 at an determined or adjusted active power setpoint P_{S,set}. With this configuration in the overall electrolysis system 100 the AC input voltage that is available on the AC bus bar 5 can be stabilized and maintained at a nominal input voltage. The droop-control 15 that is being performed is based on a predetermined dependency of the active power P on the alternating current frequency ω that is applied by virtue of a coupling constant k as droop control parameter, which can be adjusted to the specific grid situation in regard to generation and load conditions in the weak or islanded grid that is formed by electrolysis system 100.

As schematically illustrated in the diagram depicted in FIG 3 the coupling constant k describes the linear function of the active power P depending on the angular frequency ω. The droop control strategy implemented here is selected in such a way that ω(P) is a linear downward-sloping function, a control characteristic that enables a high frequency stability in the grid. In the nominal mode of operation in a balanced state, the active power P_{S} = P_{S,set} = P_{ref} and the corresponding virtual angular frequency equals ω = ω_{ref}. As a result of the control scheme, the active power P_{S} of the storage unit 15, preferably for example the BESS, can be operated in a generation mode while applying an active generation power P_{S} = P_{gen}, where the storage unit 15 is discharged and respectively active power P_{S} = P_{gen} is being supplied to the AC bus bar 5. Furthermore, the active power Ps of the storage unit 15 can be operated in a storage mode applying an active storage power Pₛₜₒᵣ, where active power P_{S} = Pₛₜₒᵣ is being extracted from the AC bus bar 5 and feed in the storage unit 15 to charge the storage unit 15. As described above in FIG 1, during operation of the electrolysis system 100 the active power P of the electrolysis plant 3 is controlled at the AC bus bar 5 of the electrolysis system 100 as by performing a measurement of the active power P and determining a measured value Pₘ at the metering point S2. The sensor S1 is designed to determine an active power measured value Pₘ about the generated active power that is feed in the AC bus bar.

With the concept of virtual inertial emulation in the storage controller stability and control of the electrolysis system 100 can be advantageously achieved. The invention provides an electrolysis system 100 with a control concept incorporated that shows an advantageous operational behaviour in weak and islanded grids. One of the main problems in weak grids, particularly for thyristor-based electrolysis plants 3, can be solved. So far, in situations where the AC input voltage 9 of the rectifiers 7 is disturbed significantly during the commutation process, the synchronisation of the AC input voltage 9 of the rectifier 7 becomes critical, such that if not done properly the whole electrolysis system 100 can become unstable. Among others, this requires having a stable AC input voltage 9 during the most critical scenarios and situation. These events may be various, e.g., deviations Δω from a referenced nominal grid frequency ω_{ref} from the renewable power generation plant 1, high inrush currents in the electrolysis plant 3 from the connection transformers 29, sudden active power input change, etc. In order to address these issues, an inverter-based energy storage system 13, such as the BESS is implemented according to the invention in parallel to the electrolysis plant 3 in such a way that the active power P_{S} of the storage unit 15 is implemented to emulate the operation of a synchronous generator. This means that instead of applying the conventional approach of active power control of inverter-based systems, which is done by controlling the AC current components at the point of interest in a public network, the virtual inertia approach would mean the control of the active power P_{S} of the BESS via a nominal virtual angular frequency ω = ω_{ref} that is controlled and adjusted with control input and processing parameter Δω of the storage controller 17.

Although the invention has been further illustrated and described in detail by the above examples, the invention is not limited by the disclosed examples, and other variations may be derived therefrom by those skilled in the art without departing from the scope of the invention.

## Claims

1. Electrolysis system (100) comprising a renewable power generation plant (1) and an electrolysis plant (3) that both are connected to a common AC bus bar (5), wherein the electrolysis plant (3) comprises a rectifier (7) whose AC input (9) is connected to the AC bus bar (5) and whose DC output (11) is arranged to supply DC current to operate an electrolysis process, and wherein an inverter-based energy storage system (13) with a storage unit (15) and a storage controller (17) is provided, the storage unit (15) being implemented in parallel to the electrolysis plant (3) and connected to the AC bus bar (5), and the storage controller (17) being configured to control the active power (P_{S}) of the storage unit (15) in such a way that the operation of a synchronous generator is emulated to stabilize the AC input voltage.

2. Electrolysis system (100) according to claim 1, wherein the storage controller (17) is configured to receive as input signal a virtual angular frequency (Δω) from a free-running oscillator such that during operation a virtual inertia is provided in the AC grid.

3. Electrolysis system (100) according to claim 1 or 2, wherein the storage controller (17) is configured to provide as output signal an AC control signal (ΔI_{AC}) usable to control operation of the storage unit (15) at a determined active power (P_{S}).

4. Electrolysis system (100) according to claim 1, 2 or 3, wherein a droop-control is implemented to stabilize the AC grid, wherein in the droop-control the dependency of the active power (P) on the alternating current frequency (ω) is stored.

5. Electrolysis system (100) according to one of the preceding claims, wherein the rectifier (7) comprises a thyristor-based rectifier.

6. Electrolysis system (100) according to claim 5, comprising a first active power sensor (S1) located at an AC connecting line of the renewable power generation plant (1) and a second active power sensor (S2) located at an AC connection line of the electrolyser plant (3), and comprising a comparator device (19) with an minuend input and a subtrahend input, the first active power sensor (S1) is connected to the minuend input and the second active power sensor (S2) is connected to the subtrahend input.

7. Electrolysis system (100) according to one of the preceding claims, wherein the electrolysis plant (3) comprises an electrolysis active power controller (21) enabled such that during operation a control of the active power (P) at the respective DC-output of a thyristor-based rectifier (7) to a set point (Pₛₑₜ) of the electrolysis plant (3) is achieved.

8. Electrolysis system (100) according to one of the preceding claims, wherein the inverter-based energy storage system (13) comprises a battery energy storage system (BESS) with a plurality of battery units switched in parallel.

9. Electrolysis system (100) according to claim 8, wherein each battery unit is connected to and supplied from a respective bidirectional inverter (23) that is connected to AC bus bar (5).

10. Electrolysis system (100) according to one of the preceding claims, wherein an islanded network or weak grid is formed.

11. Electrolysis system (100) according to one of the preceding claims, wherein the renewable power generation plant (1) comprises a wind power plant with an AC output that is connected to the AC bus bar (5).

12. Electrolysis system (100) according to one of the preceding claims, wherein the renewable power generation plant (1) comprises a photovoltaic plant with a voltage-source converters connected with its AC output to the AC bus bar (5).

13. Method for operating an electrolysis system (100) according to one of the preceding claims, whereby the active power (P_{S}) of the storage unit (15) is controlled from the storage controller (17), whereby the operation of a synchronous generator is emulated to stabilize the AC input voltage and a short circuit power (SCP) at the point of common coupling (PCC) is provided.

14. Method according to claim 13, whereby the storage controller (17) receives as input signal a virtual angular frequency (Δω) from a free-running oscillator such that during operation a virtual inertia is provided in the AC grid.

15. Method according to claim 13 or 14, whereby the storage controller (17) provides as output signal an AC control signal (ΔI_{AC}) that is used to control operation of the storage unit (15) at a determined active power setpoint (P_{S,set}).

16. Method according to one of the claims 13, 14 or 15, whereby a droop-control is being performed based on a predetermined dependency of the active power (P) on the alternating current frequency (ω) that is applied.
